# EUROPEAN PATENT APPLICATION

(11) **EP 2 194 761 A1**
(43) Date of publication of application: **09.06.2010**
(21) Application number: 09014869.3
(22) Date of filing: 01.12.2009
(51) Int. Cl.: H05B 33/08

(54) **LED Lighting device**

(30) Priority: 03.12.2008 JP 2008308390
(71) Applicant: Panasonic Electric Works Co., Ltd., Kadoma-shi Osaka 571-8686 (JP)
(72) Inventor: Matumoto, Kouji, Niigata (JP); Takamatsu, Kenichi, Niigata (JP); Ogura, Tsukasa, Niigata (JP); Kitima, Masasi, Niigata (JP); Aida, Takashi, Niigata (JP)
(74) Representative: Rüger, Barthelt & Abel Patentanwälte

(57) **Abstract**

[Summary]

[Object] To achieve an extended service life of LED by reducing a stress applied thereto.

[Means for Settlexnent] Each of LED arrays 100a to 100x is made of a plurality of LEDs D1 to Dn connected in series from each other in a forward direction, and NPN transistors Qa to Qx and resistors Ra to Rx are connected to the LED arrays 100a to 100x connected in parallel from each other. Each base of the NPN transistors Qa to Qx is connected to a switch control part 41 of a control circuit 40, and lighting control signals with mutually shifted phases are supplied from the switch control part 41 to the respective bases. Sequential lighting of the LED arrays 100a to 100x is therefore achieved.

## Description

### [Field of the Invention]

The present invention relates to an LED lighting device for lighting a plurality of LEDs connected in series from each other.

### [Background Art]

Illumination fixtures using a light emitting diode (referred to as an LED hereinafter) as a light source are generally configured with a plurality of LEDs because each single LED has a small light output. LEDs manufactured according to the same specifications are used as a light source in general, while, for example, and a plurality of LEDs are connected in series from each other to constitute a plurality of LED arrays connected in parallel. A conventional LED illumination fixture uses an LED lighting device for driving a plurality of LEDs connected in parallel from each other by a constant current in order to realize a constant light output regardless of used environments. In this case, each of the LED arrays is connected in series to a switching element such as a transistor, and the respective switching elements are turned on/off simultaneously by one lighting control signal supplied from a control circuit. The entire LEDs are therefore lighted on and/or lighted out simultaneously (e.g. refer to Patent Document 1).

The life of LED has been extended by developments in the semiconductor technique, but it is demanded to realize a further extended life for an illumination fixture in recent years. However, the above conventional illumination fixture has a problem in such that a current flowing into the entire LEDs at the time of lighting causes a stress applied to each of the LEDs constantly to influence the life thereof.

[Patent Document 1] Japanese Unexamined Patent Publication No. 2004-330927

### [Disclosure of the Invention]

### [Problems to be solved by the Invention]

The present invention was achieved by taking the above circumstances into consideration, having an object to provide an LED lighting device capable of extending the life of an LED by reducing a stress applied to the LED.

### [Means adapted to solve the Problems]

The present invention provides an LED lighting device for lighting on and lighting out a plurality of LEDs connected in series from each other to constitute a plurality of LED arrays connected in parallel from each other, including a switching element which is connected in series to each of the LED arrays and turned on/off by a lighting control signal, and a control circuit for generating the lighting control signal supplied to the switching element, wherein the control circuit generates the lighting control signal to sequentially light out at least one of the LED arrays at every predetermined time in a lighting state of the LED arrays.

This configuration allows at least one of the LED arrays to be lighted out sequentially at every predetermined time in a lighting state of the LED arrays, whereby a stress applied to the LEDs can be reduced to realize an extended service life.

The present invention also includes a voltage detection circuit for detecting a forward direction voltage in the LED arrays in the LED lighting device, wherein the control circuit generates the lighting control signal based on a voltage detected by the voltage detection circuit.

This configuration allows at least one of the LED arrays to be lighted out sequentially at every predetermined time in a lighting state of the LED arrays, and provides a constant light output by causing a constant current to flow into the LED arrays, whereby a stress applied to the LEDs can be reduced to realize an extended service life.

The present invention further includes a current detection circuit for detecting a current flowing into the entire LED arrays in the LED lighting device, wherein the control circuit generates the lighting control signal based on a current detected by the current detection circuit.

This configuration allows at least one of the LED arrays to be lighted out sequentially at every predetermined time in a lighting state of the LED arrays and provides a constant light output, whereby a stress applied to the LEDs can be reduced to realize an extended service life.

Moreover, the present invention includes a PWM circuit arranged in the control circuit in the LED lighting device and the lighting control signal is generated based on a duty ratio set in accordance with the detected voltage and/or current.

This configuration allows at least one of the LED arrays to be lighted out sequentially at every predetermined time in the lighting state of the LED arrays and provides the constant light output, whereby a stress applied to an LED can be reduced to realize an extended service life.

The present invention also includes a resistor connected in series to each of the LED arrays in the LED lighting device.

This configuration makes it possible to prevent an excessive current from flowing into the LED arrays, whereby the stress applied to the LED is reduced to realize an extended service life.

Furthermore, the present invention connects a zener diode having a zener voltage larger than a forward direction voltage in the LED in parallel with the LED with each polarity reversed in the LED lighting device.

This configuration connects the zener diodes having the zener voltage larger than the forward direction voltage in parallel with the LED by setting polarity thereof reversed to that of the LED, whereby a current is made to flow only in the serially connected LEDs in a normal LED state. Meanwhile, even if any of the plurality of the serially connected LEDs are disconnected due to a failure or other causes, a current is made to flow by making a detour via a zener diode connected in parallel with a disconnected LED. Accordingly, it is made possible to prevent the LED arrays from being lighted out entirely.

### [Effect of the Invention]

The present invention makes it possible to provide an LED lighting device capable of realizing an extended service life of LED by reducing a stress applied thereto.

### [Best Mode for Carrying Out the Invention]

An LED lighting device according to the present invention is used for, for example, an illumination fixture in a vehicle such as an automobile.
The LED lighting device according to embodiments of the present invention will be explained below by using drawings.

### (First embodiment)

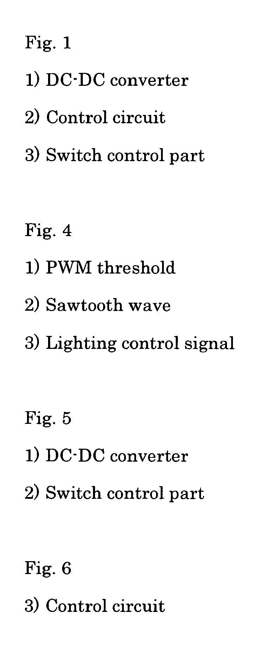

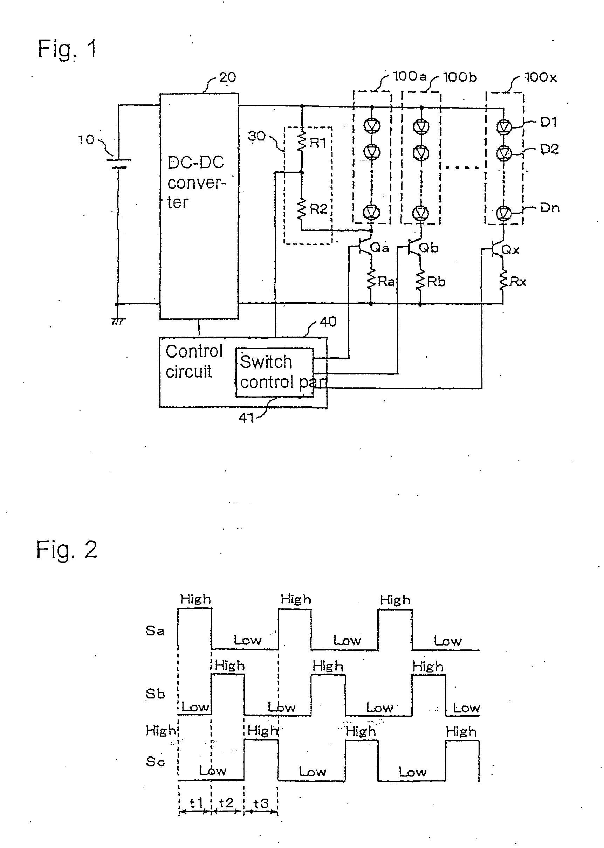

Fig. 1 shows a schematic configuration of the LED lighting device according to a first embodiment of the present invention. The LED lighting device according to the present embodiment is configured to have a DC power source 10 such as buttery, a DC-DC converter 20, a voltage detection part 30 and a control circuit 40.

The DC-DC converter 20 is configured to have a semiconductor element and a transformer not shown so as to convert a DC voltage supplied from the DC power source 10 into a direct current with a predetermined voltage which is supplied as a light source to light on LED arrays 100a to 100x to be described later.

The voltage detection part 30 includes resistors R1 and R2 connected in series from each other between a positive voltage side of the DC-DC converter 20 and a collector of an NPN transistor Qa to be described later, wherein a forward direction voltage in the LED arrays 100a to 100x is divided and detected by the resistors R1 and R2. A detected voltage is fed back to the control circuit 40 so as to control a voltage outputted from the DC-DC converter 20.

The control circuit 40 has a switch control part 41 which outputs a lighting control signal for switching each of NPN transistors Qa to Qx to be described later by a predetermined period and a duty ratio, and integrally controls each part of the LED lighting device while controlling the LED arrays 100a to 100x to be lighted on and lighted out.

Each of the LED arrays 100a to 100x has a plurality of LEDs D1 to Dn connected in series from each other in a forward direction and is connected in parallel between a positive voltage side and a ground side of the DC-DC converter 20.

Also connected in series to the LED arrays 100a to 100x are the NPN transistors Qa to Qx and resistors Ra to Rs respectively in a space to face the ground side of the DC-DC converter 20.

Each connector of the NPN transistors Qa to Qx is connected to a cathode of the LEDs D1 to Dn belonging to each of the LED arrays 100a to 100x, and an emitter of the NPN transistors Qa to Qx is connected to each of the resistors Ra to Rx, a base of each of the NPN transistors Qa to Qx is connected to the switch control part 41 to receive a lighting control signal.

The resistors Ra to Rx define a current flowing into the LED arrays 100a to 100x and function to light on the LEDs D1 to Dn with a predetermined light output.

Explained next will an operation of an LED lighting device according to the first embodiment of the present invention being configured described above.

The switch control part 41 inputs a reference periodic signal having a fixed period and generates a plurality of lighting control signals each having a different phase so as to output to each base of the NEP transistors Qa to Qx.

Fig. 2 is a timing chart showing an example of the lighting control signals generated by the switch control part 41. In Fig. 2, Sa to Sc refer to the lighting control signals supplied to the respective bases of the transistors Qa to Qc.

As shown in Fig. 2, the lighting control signal Sa is high and the lighting control signals Sb and Sc are low in a period t1. Therefore, the transistor Qa is turned on to cause a current to flow into the LEDs D1 to Dn in the LED array 100a and realizes lighting. At this time, the transistors Qb and Qc are turned off, wherein a non-lighting state is maintained in the LEDs D1 to Dn in each of the LED arrays 100b and 100c.

In a subsequent period t2, only the lighting control signal Sb is high and the other signals are low, wherein the transistor Sb is turned on to realize lighting only in the LED array 100b. Similarly, in a period t3, the lighting control signal Sc is high to realize lighting in the LED array 100c.

The lighting control signals with shifted phases are thus supplied to the respective bases of the transistors Qa to Qx, whereby the corresponding LED arrays 100a to 100x are lighted on sequentially. A stress applied to the LEDs D1 to Dn in each of the LED arrays 100a to 100x is therefore reduced to realize an extended service life of the LEDs.

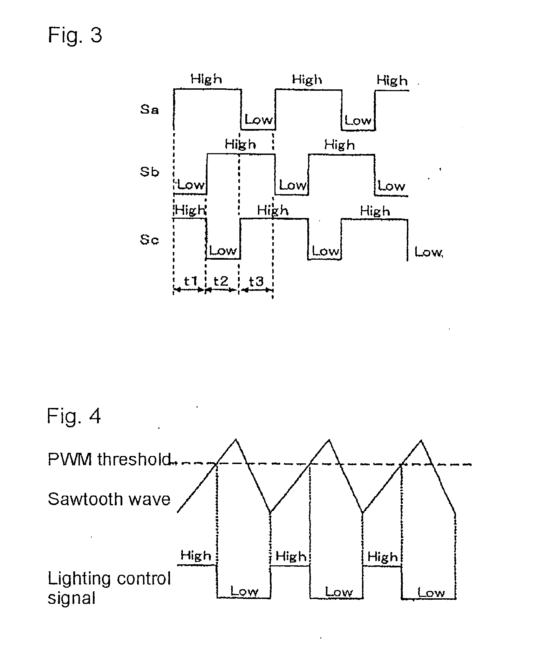

Fig. 3 is a timing chart showing another example of the lighting control signals generated by the switch control part 41.

In Fig. 3, the lighting controls signals Sa and Sc are high and the lighting control signal Sb is low in a period t1. The transistors Qa and Qc are therefore turned on to cause a current to flow into the LED arrays 100a and 100c, whereby lighting is achieved in the LEDs D1 to Dn in the respective LED arrays. At this time, the transistor Qb is turned off with no lighting observed in the LEDs D1 to Dn in the LED array 100b.

In a period t2, the lighting control signals Sa and Sb are high and the lighting control signal Sc is low, wherein the transistors Qa and Qb are turned on to realize lighting in the LED arrays 100a and 100b. Similarly, in a period t3, the lighting control signals Sb and Sc are high to realize lighting in the LED arrays 100b and 100c.

The lighting control signals shown in Fig. 3 thus allow simultaneous lighting in two of the LED arrays sequentially. Therefore, a stress applied to the LEDs D1 to Dn in each of the LED arrays 100a to 100x is reduced to realize an extended service life. Note that the LED arrays disposed adjacently from each other are lighted on and/or lighted out simultaneously in the present embodiment, but it is not limited to this and, for example, two of the LED arrays arranged with a predetermined distance may also be lighted on and/or lighted out simultaneously. Moreover, the number of LED arrays to be lighted on and/or lighted out simultaneously is not limited to one or two and may also be three or more.

As explained above, such an LED lighting device according to the first embodiment of the present invention switches the transistors connected to the plurality of the LED arrays each containing the plurality of the serially connected LEDs by the lighting control signals with mutually shifted phases so as to light on the LED arrays sequentially, whereby a stress applied to the LEDs can be reduced to realize an extended service life.

### (Second embodiment)

The present embodiment exemplifies a method to maintain a constant current flowing into LED arrays by controlling a voltage outputted from the DC-DC converter 20 based on a forward direction voltage in the LED arrays detected by the voltage detection part 30 as shown in Fig. 1.

In the voltage detection part 30 shown in Fig. 1, a forward direction voltage in the LED arrays 100a to 100x is detected by dividing a generated voltage by a current flowing into the resistors R1 and R2 which are connected between a positive voltage side of the DC-DC converter 20 and a collector of the NPN transistor Qa, and inputted to a comparator not shown in the control circuit 40 to calculate a difference relative to a reference voltage so as to output to the DC-DC converter 20.

The DC-DC converter 20 controls a PWM circuit not shown based on an output from the comparator so as to output a DC voltage to the LED arrays 100a to 100x. A current flowing into the LED arrays is therefore maintained to be constant and a predetermined light output can be obtained.

A forward direction voltage in the LED arrays detected by the voltage detection part 30 is also used for setting a duty ratio of the lighting control signals supplied to the transistors Qa to Qx.

Fig. 4 is a time chart to explain a method for controlling a lighting output to be constant in the LED arrays by setting a duty ratio of the lighting control signals through a PWM control made on the basis of a forward direction voltage in the LED arrays detected by the voltage detection part 30 shown in Fig. 1.

As shown in Fig. 4, a PWM threshold of a sawtooth wave is switched based on the forward direction voltage in the LED arrays detected by the voltage detection part 30. A duty ratio is therefore set to generate the lighting control signals supplied to the respective bases of the NPN transistors Qa to Qx based on a set duty ratio.

The lighting control signals to be generated are outputted from the switch control part 41 to the respective bases of the transistors Qa to Qx. Therefore, constant lighting power is maintained in the LED arrays 100a to 100x and a predetermined light output can be obtained.

Note that the present embodiment uses a forward direction voltage in the LED arrays detected by the voltage detection part 30 as a basis to control a voltage outputted from the DC-DC converter 20 and set a duty ratio of the lighting controls signals, but may also, for example, detect a current flowing into the LED arrays 100a to 100x to perform a similar control and setting based on a detected current.

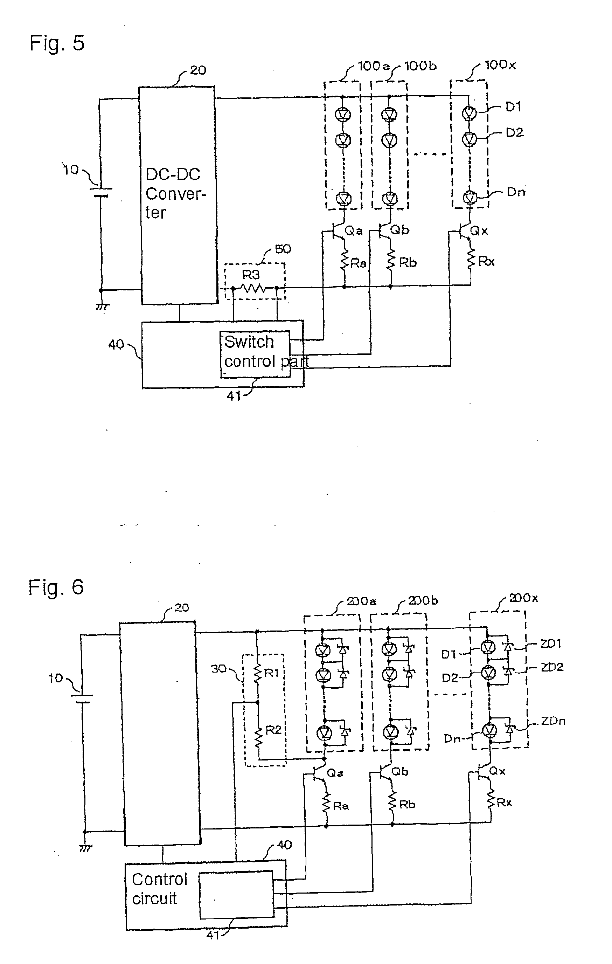

Fig. 5 shows a schematic configuration of an LED lighting device according to the second embodiment of the present invention. It is configured to have a current detection part 50 in place of the voltage detection part 30 in the first embodiment as shown in Fig. 1.

The current detection part 50 which includes a resistor R3 interposed in series on a ground side of the DC-DC converter 20 inputs a voltage generated between both ends of the resistor R3 by a current flowing into the LED arrays 100a to 100x to the control circuit 40.

The voltage inputted to the control circuit 40 is used to calculate a difference relative to a reference voltage by the comparator so as to control a voltage outputted from the DC-DC converter 20 and set a duty ratio of lighting control signals. Therefore, a current flowing into the LED arrays is maintained to be constant and a predetermined light output can be obtained.

As explained above, such the LED lighting device according to the second embodiment of the present invention detects a forward direction voltage in the LED arrays and/or a current flowing in the entire LED arrays, and controls a voltage outputted from the DC-DC converter 20 based on a detected voltage and/or current, whereby the current flowing into the LED arrays is maintained to be constant and the predetermined light output can be obtained.

A duty ratio can also be set by switching a PWM threshold based on a detected forward direction voltage in the LED arrays and/or a detected current flowing in the entire LED arrays, and the lighting control signals supplied to the transistors which are connected to the respective LED arrays are generated based on a set duty ratio, whereby the current flowing into the LED arrays is maintained to be constant and the predetermined light output can be obtained.

### (Third embodiment)

Fig. 6 shows a schematic configuration of an LED lighting device according to a third embodiment of the present invention. The LED lighting device according to the present embodiment is configured to have LED arrays 200a to 200x in place of the LED arrays 100a to 100x in the first embodiment as shown in Fig. 1. The remaining configuration is the same as that of the first embodiment, and explanation thereof is omitted by providing the same reference numbers.

LEDs D1 to Dn in each of the LED arrays 200a to 200x are connected in parallel with zener diodes ZD1 to ZDn respectively with each polarity reversed. Here, a zener voltage Vc of the zener diodes ZD1 to ZDn is set to be higher than a forward direction voltage Vf in the LEDs D1 to Dn.

Such a configuration realizes Vf which is smaller than Vc if the entire LEDs D1 to Dn are in a normal state, wherein no current is made to flow in the zener diodes ZD1 to ZDn connected in parallel therewith and it is only the LEDs D1 to Dn in which a current is made to flow.

Meanwhile, if a failure occurs in any one of the LEDs or, for example, in the LED D1 in any of the LED arrays due to disconnection or other causes, a forward voltage is raised to make Vf larger than Vc, followed by causing a current to flow by making a detour via the zener diode ZD1 as a result. However, the remaining normal LEDs D2 to Dn have Vf which is smaller than Vc, so that a current is made to flow therein without making a detour via the zener diode ZD1.

It is therefore possible to prevent the LEDs from being lighted out entirely if any one of the LEDs D1 to Dn has a failure in the LED arrays 200a to 200x each of which contains the LEDs D1 to Dn connected in series from each other.

Note that the LED arrays 200a to 200x in the present embodiment are controlled to be lighted on sequentially by switching the transistors connected to the LED arrays by the lighting control signals with mutually shifted phases in the same manner with the LED arrays 100a to 100x in the first embodiment, whereby a stress applied to the LEDs can be reduced.

As explained above, such an LED lighting device according to the third embodiment of the present invention connects the zener diodes having a zener voltage higher than a forward direction voltage in the LEDs in parallel with the plurality of the LEDs which constitute each of the LED arrays by setting each polarity reversed, whereby making it possible to prevent the LEDs from being lighted out entirely in the case of having a failure in any of the plurality of the LEDs.

### [Brief Description of the Drawings]

[Fig. 1] Fig. 1 shows a schematic configuration of an LED lighting device according to a first embodiment of the present invention.
[Fig. 2] Fig. 2 is a timing chart showing one example of lighting control signals in the LED lighting device according to the first embodiment of the present invention.
[Fig. 3] Fig. 3 is a timing chart showing another example of the lighting control signals in the LED lighting device according to the first embodiment of the present invention.
[Fig. 4] Fig. 4 is a time chart to explain a PWM control made for the lighting control signals in the LED lighting device according to the first embodiment of the present invention.
[Fig. 5] Fig. 5 shows a schematic configuration of the LED lighting device according to a second embodiment of the present invention.
[Fig. 6] Fig. 6 shows a schematic configuration of the LED lighting device according to a third embodiment of the present invention.

### [Description of Reference Numerals]

100a to 100x, 200a to 200x: LED array
20: DC-DC converter
30: Voltage detection part
40: Control part
41: Switch control part
50: Current detection part
D1 to Dn: LED
Qa to Qx: Transistor
ZD1 to ZDn: Zener diode

## Claims

1. An LED lighting device for lighting on and lighting out a plurality of LEDs connected in series from each other to constitute a plurality of LED arrays connected in parallel from each other, the LED lighting device comprising:
a switching element connected in series to each of the LED arrays and turned on/off by a lighting control signal; and
a control circuit for generating the lighting control signal supplied to the signal to the switching element, wherein
the control circuit generates a lighting control signal to sequentially light out at least one of the LED arrays at every predetermined time in a lighting state of the LED arrays.

2. The LED lighting device according to claim 1, comprising
a voltage detection circuit for detecting a forward direction voltage in the LED array, wherein
the control circuit generates the lighting control signal based on a voltage detected by the voltage detection circuit.

3. The LED lighting device according to claim 1, comprising
a current detection circuit for detecting a current flowing in the entire LED arrays, wherein
the control circuit generates the lighting control signal based on a current detected by the current detection circuit.

4. The LED lighting device according to claim 2 or 3, wherein
the control circuit includes a PWM circuit and
the control circuit generates the lighting control signal based on a duty ratio set in accordance with the detected voltage and/or current.

5. The LED lighting device according to any one of claims 1 to 4, wherein
a resistor is connected in series to the LED array.

6. The LED lighting device according to any one of claims 1 to 5, wherein
a zener diode having a zener voltage larger than a forward direction voltage in the LED is connected in parallel with the LED with each polarity reversed.
